# EUROPEAN PATENT APPLICATION

(11) **EP 2 913 412 A1**
(43) Date of publication of application: **02.09.2015**
(21) Application number: 13851796.6
(22) Date of filing: 29.10.2013
(51) Int. Cl.: C22B 11/00, B01D 11/04, C22B 3/04, C22B 3/26, C22B 3/46, C22B 7/00

(54) **METHOD FOR COLLECTING SILVER**

(30) Priority: 29.10.2012 JP 2012238223
(71) Applicant: JX Nippon Mining & Metals Corporation, Tokyo 100-8164 (JP)
(72) Inventor: ONO,Eiki, Hitachi-shi Ibaraki 317-0056 (JP); HATANO,Kazuhiro, Hitachi-shi Ibaraki 317-0056 (JP)
(74) Representative: Luten, Martin Haaije
(86) International application number: PCT/JP2013/079282
(87) International publication number: WO 2014/069463

(57) **Abstract**

A method for efficiently collecting high-purity silver from an acidic aqueous solution containing silver and at least one of iron and zinc with a simple device is provided. The method for collecting silver includes separating silver and at least one of iron and zinc from an acidic aqueous solution containing silver and at least one of iron and zinc by solvent extraction using tributyl phosphate as an extractant.

## Description

### [Technical Field]

The present invention relates to a method for efficiently collecting silver from an acidic aqueous solution containing silver and at least one of iron and zinc.

### [Background Art]

Silver has been used in a wide range of fields such as photographic materials and electronic component materials. Meanwhile, most of the mined silver is concomitantly produced from ores of copper, zinc, or the like. The content of silver is extremely small compared with that of copper or zinc. The collection of silver from each of waste products, waste liquid, and ores is therefore desired, and various methods have been studied. Examples of typical methods for separating and collecting silver in aqueous solution by wet process include converting silver into a silver halide with low solubility such as silver chloride for precipitation and collection. This method utilizes the low solubility of silver halides in aqueous solution. The solubility is, however, not zero, allowing a slight amount of silver halides to be dissolved.

For example, as the solubility of silver halides, in the case of silver chloride dissolved in a hydrochloric acid solution, the calculated solubility of silver is about 75 mg/L. It is known, however, that the solubility of silver varies depending on the conditions for dissolving silver halide, such as coexistence of acid and temperature, resulting in difference in the silver concentration in a solution depending on operating conditions. Although it is thus difficult to clearly define the solubility of silver, it is assumed to be about 100 ppm or less.

Consequently, although precipitation and collection may be performed for a solution with a silver content equal to or more than the solubility, the method cannot be applied to a silver-containing solution with a content equal to or less than the solubility. As the situation now stands, embodiments of collection of silver from a dilute silver solution with a content equal to or less than the solubility are few.

An embodiment of collecting silver from dilute silver solution by cementation is described in Patent Literature 1.

However, according to the embodiment of Patent Literature 1, the material collected by cementation has low silver quality with a purity of about 1.4% at the maximum, so that concentrated silver cannot be collected. It is therefore believed that another step is required for increasing the purity of silver. Since collection of silver from a silver solution with a silver content equal to the silver solubility or less is extremely difficult as described above, the development of an efficient collection method is required.

Further, it is known that the influence of impurities is large in solvent extraction. Although there is a difference depending on operation, iron, copper and zinc are often mixed in general. Consequently, the effect of mixing on the extraction is concerned.

In Patent Literature 2, solvent extraction in the case of including copper, cadmium, nickel, zinc, and magnesium at a concentration approximately equal to that of silver is described.

In Patent Literature 2, it is described that using a chloroform solution containing dissolved dicyclohexano-18C6-crown ether as an extractant, nitric acid or perchloric acid is added to a silver solution, so that impurities other than silver are not extracted. In Patent Literature 2, although the extraction behavior under conditions with an impurity concentration approximately equal to or less than the silver concentration is described, the extraction behavior is unknown under conditions with an impurity concentration higher than the silver concentration. Further, due to high volatility of chloroform for use, the repeated use of chloroform is difficult, requiring replenishment of volatilized chloroform. Furthermore, since addition of nitric acid or perchloric acid is required, the cost is presumed to be increased due to addition of chemicals.

### [Citation List]

### [Patent Literature]

[Patent Literature 1] Japanese Patent Laid-Open No. 2008-115429
[Patent Literature 2] Japanese Patent Laid-Open No. 2008-285691

### [Summary of Invention]

### [Technical Problem]

An object of the present invention is therefore to provide a method for efficiently collecting high-purity silver from an acidic aqueous solution containing silver and at least one of iron and zinc with a simple device.

### [Solution to Problem]

As a result of intensive studies to solve the above problem, the present inventors have found that high-purity silver can be collected from an acidic aqueous solution containing silver and at least one of iron and zinc with a simple device, by performing solvent extraction with tributyl phosphate (TBP) as an extractant.

According to one aspect of the present invention accomplished based on the above finding, a method for collecting silver includes separating silver and at least one of iron and zinc from an acidic aqueous solution containing silver and at least one of iron and zinc by solvent extraction using tributyl phosphate as an extractant.

In one embodiment of the method for collecting silver of the present invention, the acidic aqueous solution contains no iron and the method includes the steps of: solvent-extracting the zinc together with silver from the acidic aqueous solution using tributyl phosphate; removing zinc from the solvent containing silver and zinc after the solvent extraction by scrubbing; and back-extracting silver from the solvent containing silver after solvent extraction with the zinc removed.

In another embodiment of the method for collecting silver of the present invention, the acidic aqueous solution contains no zinc and the method includes the steps of: selectively solvent-extracting the iron from the acidic aqueous solution using tributyl phosphate having an adjusted metal concentration; solvent-extracting the silver from the acidic aqueous solution after the selective extraction of the iron using the tributyl phosphate; and back-extracting silver from the solvent containing silver after solvent extraction.

In yet another embodiment of the method for collecting silver of the present invention, the acidic aqueous solution contains both of iron and zinc and the method includes the steps of: selectively solvent-extracting the iron from the acidic aqueous solution using tributyl phosphate having an adjusted metal concentration; solvent-extracting the zinc together with silver from the acidic aqueous solution after the selective extraction of the iron; removing zinc from the solvent containing zinc and silver after the solvent extraction by scrubbing; and back-extracting silver from the solvent containing silver after solvent extraction with the zinc removed.

In yet another embodiment of the method for collecting silver of the present invention, silver is separated from at least one of the iron and the zinc by adjusting the concentrations of metals contained in tributyl phosphate for use in the solvent extraction and in the scrubbing solution for use in removal of a prescribed metal from the solvent-extracted metals, respectively.

In yet another embodiment of the method for collecting silver of the present invention, when the acidic aqueous solution contains copper, the copper is left in the post-extraction solution without performing the solvent extraction.

In yet another embodiment of the method for collecting silver of the present invention, a back-extractant used in the step of back-extracting is a sodium thiosulfate solution.

In yet another embodiment of the method for collecting silver of the present invention, the back-extractant used in the step of back extracting is thiosulfuric acid, hydrochloric acid, a saline solution, or nitric acid.

In yet another embodiment of the method for collecting silver of the present invention further includes the step of precipitating silver from the solution by cementation after the back extraction of silver.

In yet another embodiment of the method for collecting silver of the present invention, a concentration of silver in the sodium thiosulfate solution after the back extraction is controlled to 0.5 g/L or more.

In yet another embodiment of the method for collecting silver of the present invention, when cementation is performed using a copper component, the post-cementation solution is supplied into the back-extractant for repeated use.

In yet another embodiment of the method for collecting silver of the present invention, a silver concentration in the acidic aqueous solution is 100 mg/L or less.

In yet another embodiment of the method for collecting silver of the present invention, a quality of the collected silver-containing material is 50% or more.

In yet another embodiment of the method for collecting silver of the present invention, the acidic aqueous solution is a post-leaching solution obtained after leaching of ores or mineral concentrates containing sulfides of copper.

### [Advantageous Effect of Invention]

According to the present invention, a method for efficiently collecting silver from an acidic aqueous solution containing silver and at least one of iron and zinc with a simple device is provided.

### [Brief Description of Drawings]

[Figure 1] Figure 1 is a flow chart illustrating a method for collecting silver in an embodiment of the present invention.
[Figure 2] Figure 2 is a graph showing co-extraction curves of silver and zinc obtained in Example 2.
[Figure 3] Figure 3 is a graph showing the relations between reaction time and silver concentration in the solution obtained in Example 6.

### [Description of Embodiment]

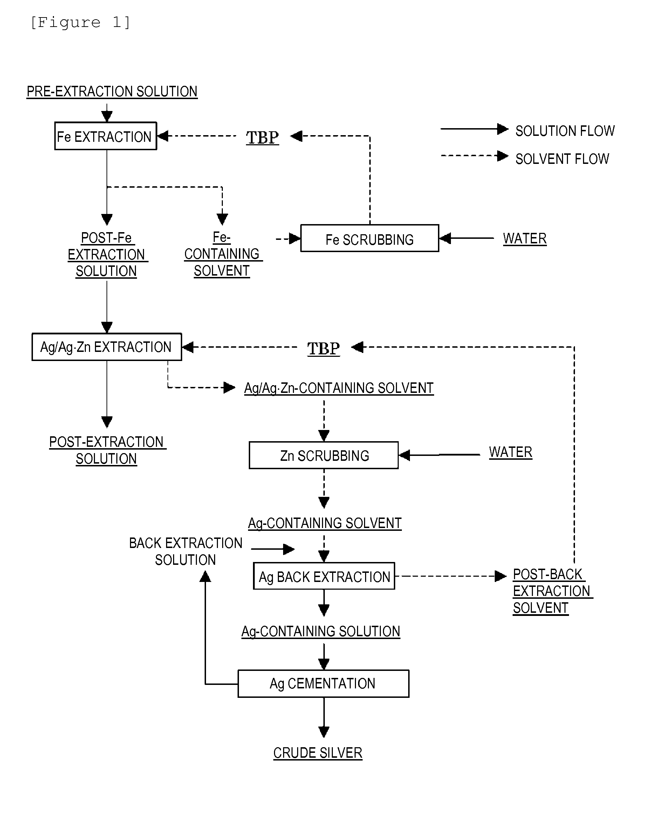

The embodiments of the method for collecting silver of the present invention are described in the following. In Figure 1, the flow chart of the method for collecting silver in an embodiment of the present invention is shown.

In an embodiment of the method for collecting silver of the present invention, silver and at least one of iron and zinc are separated from an acidic aqueous solution containing silver and at least one of iron and zinc by solvent extraction using tributyl phosphate as an extractant. In an embodiment, the method for collecting silver of the present invention includes adjusting the concentration of metals contained in tributyl phosphate or in the scrubbing solution, for separation of silver from iron and zinc without adding agents for pH control or the like in order to remove iron and zinc.

### (Solution to be treated)

In an embodiment, the aqueous solution from which silver is collected by the method of the present invention is a post-leaching solution of copper concentrates, i.e. a post-leaching solution obtained by leaching of ores or mineral concentrates which contain sulfides of copper, typically ores or mineral concentrates mainly composed of sulfides of copper, though not particularly limited thereto. Any conventional leaching solution may be used without specific limitations, and an acidic aqueous solution of mineral acid such as sulfuric acid and hydrochloric acid is usually used. Accordingly, the silver-containing aqueous solution to be treated by the method of the present invention (hereinafter, referred to as "pre-extraction solution") is usually acidic, having a pH of, for example, 2.5 or less, typically 0 to 1.5. According to the present invention, high-purity silver can be collected from an acidic aqueous solution with a low silver content, using a simple device. The silver concentration in the aqueous solution with a low concentration of silver described herein is 100 mg/L or less, typically 10 to 50 mg/L. The pre-extraction solution contains copper at a concentration of typically 0.1 to 30 g/L, together with 10 to 200 g/L of chlorine and 10 to 120 g/L of bromine. The pre-extraction solution further contains zinc and/or iron. The pre-extraction solution contains iron at a concentration of, for example, 0.1 to 10 g/L, and zinc at a concentration of, for example, 0.05 to 5 g/L.

### [Embodiment 1: In the case of pre-extraction solution containing zinc and silver]

### (Solvent extraction)

Zinc and silver are solvent-extracted (co-extracted) from a pre-extraction solution (silver-containing aqueous solution) using tributyl phosphate as an extractant. Solvent extraction operation itself may follow a conventional method. For example, a silver-containing aqueous solution (water phase) and an extractant (organic phase) are contacted with each other and agitated and mixed typically by a mixer for reaction of zinc and silver with the extractant. The reaction may be performed under conditions with a pH of, preferably 0 to 2.0, more preferably 0 to 1.0, at room temperature (10 to 30°C) to 60°C, under atmospheric pressure. The volume ratio of the extractant (O) to the aqueous solution (A), i.e. the O/A ratio, the reaction time, and the extraction stage may be arbitrarily chosen without specific limitations.

### (Tributyl phosphate)

In the present invention, tributyl phosphate is used as an extractant. Tributyl phosphate is a common chemical and a type of extractant referred to as a neutral extractant. A neutral extractant extracts uncharged complexes. For example, the extraction reaction of silver chloride is represented by the following expression (1), in which metal complexes are solvated with tributyl phosphate for extraction. The degree of extraction is different depending on complex species. Metals including silver are present as ions or complexes in a solution, and the complex species varies with the anion concentration in the solution. For example, the complex species of silver chloride complex varies with the chlorine concentration, being present in a form of such as AgCl₂⁻ and AgCl.

TBP+AgCl₂⁻=AgCl·TBP+Cl⁻ (1)

Since metals extracted by TBP are present as complexes in the solvent, mixing an aqueous solution in which the metal complexes are soluble with TBP enables the metals extracted in TBP to be back-extracted. For example, silver chloride cannot be back-extracted with water, due to having almost no solubility in pure water. In contrast, for example, iron chloride and zinc chloride can be back-extracted from TBP using water, due to having solubility in water, so that silver and other metals can be easily separated.

In the case of back-extracting silver remaining in a solvent, a solution in which silver chloride can be dissolved, for example, hydrochloric acid, nitric acid, brine, or a thiosulfate solution may be used.

Examples of tributyl phosphate include TBP made by Daihachi Chemical Co., Ltd., which can be mixed with any diluents for use. Tributyl phosphate is a chemically stable material, which is known to have small volatility and explosivility, with little effects on the human body.

### (Zinc scrubbing)

Subsequently, zinc is removed from the solvent after solvent extraction by scrubbing using pure water or a weakly acidic aqueous solution. During the scrubbing, silver does not move to the water phase, and impurities other than silver are removed from the post-extraction solution. The scrubbing may be performed under conditions with a pH of, preferably 0 to 3.0, more preferably 0 to 2.0, at room temperature (10 to 30°C) to 60°C, under atmospheric pressure. The volume ratio of the extractant (O) to the aqueous solution (A), i.e. the O/A ratio, the reaction time, and the extraction stage may be arbitrarily chosen without specific limitations.

### (Back extraction)

After removal of zinc by scrubbing, silver may be back-extracted from the silver-containing solvent by using, for example, a sodium thiosulfate solution as a back extractant. The back extraction conditions include a sodium thiosulfate solution concentration of preferably 0.1 to 2.0 mol/L, more preferably 0.5 to 1.0 mol/L, a pH of, preferably 4 to 10, more preferably 6 to 10. The volume ratio of the extractant (O) to the aqueous solution (A), i.e. the O/A ratio, the reaction time, and the number of back extraction stage may be arbitrarily chosen. In the case of using a sodium thiosulfate solution, silver in the solvent, even in a low-soluble silver halide form such as silver chloride, can be easily dissolved, so that silver is satisfactorily prevented from precipitating in the thiosulfuric acid solution. The solvent after back extraction can be supplied into the extractant for use in the above-described co-extraction of zinc and silver. This is advantageous in terms of cost.

On this occasion, the silver concentration in the sodium thiosulfate solution after back extraction of silver is controlled preferably to 0.5 g/L or more, more preferably to 1.0 g/L or more. Through this control, the total amount of solution to be handled can be reduced, so that industrial cementation extraction can be efficiently performed in the subsequent cementation step. The silver concentration in the sodium thiosulfate solution after back extraction of silver can be controlled to 0.5 g/L or more by, for example, adjustment of the O/A ratio, though not particularly limited thereto.

Examples of the back extractant for use other than sodium thiosulfate include thiosulfuric acid, hydrochloric acid, saline solution and nitric acid.

### (Silver cementation)

Subsequently, high-purity silver is precipitated from the solution after back extraction of silver by cementation. The silver cementation can be performed by a known method to immerse metallic copper or metallic iron in a silver solution. On this occasion, the metallic copper or metallic iron may be in any shape including a plate form and a powder form. Thus obtained post-cementation solution may be supplied into the back-extractant for repeated use. The reuse of the post-cementation solution is advantageous in terms of cost.

### [Embodiment 2: In the case of pre-extraction solution containing iron and silver]

### (Solvent extraction)

Iron is selectively solvent-extracted from a pre-extraction solution using tributyl phosphate as an extractant. On this occasion, the metal concentration of the pre-extraction solvent is adjusted such that only iron can be selectively extracted. In the case of solvent extraction from a pre-extraction solution using tributyl phosphate as an extractant, iron only can be selectively extracted more easily as the metal concentration in the pre-extraction solvent increases. More specifically, with a metal concentration in the pre-extraction solvent of 10 g/L or more, iron only can be sufficiently selectively extracted. The extraction may be performed under other conditions with a pH of, preferably 0 to 2.0, more preferably 0 to 1.0, at room temperature (10 to 30°C) to 60°C, under atmospheric pressure. The volume ratio of the extractant (O) to the aqueous solution (A), i.e. the O/A ratio, the reaction time, and the extraction stage may be arbitrarily chosen without specific limitations.

### (Iron scrubbing)

Subsequently, iron is removed from the solvent after solvent extraction by scrubbing, using pure water or a weakly acidic aqueous solution. The removal may be performed under conditions with a pH of, preferably 0 to 3.0, more preferably 0.5 to 2.0, at room temperature (10 to 30°C) to 60°C, under atmospheric pressure. The volume ratio of the extractant (O) to the aqueous solution (A), i.e. the O/A ratio, the reaction time, and the extraction stage may be arbitrarily chosen without specific limitations. The solution after removal of iron by scrubbing may be supplied once again into the extractant for the solvent extraction. On this occasion, the metal concentration of the extractant may be adjusted by adjusting the degree of iron removal by scrubbing.

### (Back extraction and silver cementation)

The operation and conditions for back extraction of silver after removal of iron by scrubbing, and the operation and conditions of silver cementation of the solution after back extraction of silver are the same as in the embodiment 1, respectively.

### [Embodiment 3: In the case of pre-extraction solution containing iron, zinc, and silver]

### (Solvent extraction)

Iron is selectively solvent-extracted from a pre-extraction solution using tributyl phosphate as an extractant. On this occasion, the metal concentration of the pre-extraction solvent is adjusted such that iron only is selectively extracted. In the case of solvent extraction from a pre-extraction solution using tributyl phosphate as an extractant, iron only is selectively extracted more easily as the metal concentration in the pre-extraction solvent increases. More specifically, with a metal concentration in the pre-extraction solvent of 10 g/L or more, iron only can be sufficiently selectively extracted. The extraction may be performed under other conditions with a pH of, preferably 0 to 2.0, more preferably 0 to 1.0, at room temperature (10 to 30°C) to 60°C, under atmospheric pressure. The volume ratio of the extractant (O) to the aqueous solution (A), i.e. the O/A ratio, the reaction time, and the extraction stage may be arbitrarily chosen without specific limitations.

### (Iron scrubbing)

Subsequently, iron is removed from the solvent after solvent extraction by scrubbing, using pure water or a weakly acidic aqueous solution. The removal may be performed under conditions with a pH of, preferably 0 to 3.0, more preferably 0.5 to 2.0, at room temperature (10 to 30°C) to 60°C, under atmospheric pressure. The volume ratio of the extractant (O) to the aqueous solution (A), i.e. the O/A ratio, the reaction time, and the extraction stage may be arbitrarily chosen without specific limitations. The solution after removal of iron by scrubbing may be supplied once again into the extractant for the solvent extraction. On this occasion, the metal concentration of the extractant may be adjusted by adjusting the degree of iron removal by scrubbing.

### (Co-extraction of zinc and silver)

Subsequently, zinc, together with silver, is solvent-extracted from the acidic aqueous solution after selective extraction of iron. Preferably the tributyl phosphate for use herein is newly prepared separately from the one for use in the selective removal of iron in the preceding step. The mixing of iron is thus prevented, so that high-purity silver can be collected. On this occasion, the extraction operation and conditions are the same as in the solvent extraction in embodiment 1.

### (Zinc scrubbing, back extraction, and silver cementation)

Subsequently, from the solvent after co-extraction of zinc and silver, zinc is removed by scrubbing, and silver is then back-extracted and collected by cementation. The operation and conditions of the zinc scrubbing, the back extraction of silver, and the silver cementation are the same as in embodiment 1, respectively.

In embodiments 1 to 3, in the case of the acidic aqueous solution containing copper, the copper remaining in the post-extraction solution may be separated without solvent extraction. More specifically, with reference to the flow chart in Figure 1, since copper is not extracted by TBP, the copper moves into a Fe post-extraction solution in a Fe extraction step. In an Ag/Ag·Zn extraction step, the copper is moved into the post-extraction solution for separation.

The method for collecting silver of the present invention with the above-mentioned constitution allows high-purity silver to be efficiently collected from a low-concentration silver solution with a simple device. More specifically, the collected material containing silver obtained by the method for collecting silver of the present invention has a quality of 50% or more, preferably 80% or more.

### [Examples]

Examples of the present invention are described in the following. However, the present examples are given for illustrative purpose only, and the invention is not limited thereto. Within the technical idea of the present invention, all the aspects or modifications other than the examples are included in the invention.

### (Example 1: Selective extraction of iron)

Extraction of an aqueous solution (Cu: 20 g/L, Fe: 2 g/L, Zn: 2 g/L, Ag: 20 mg/L, Cl: 130 g/L, and Br: 13 g/L) simulated for a post-leaching solution obtained after chlorination leaching of copper concentrates was performed using 50 vol.% tributyl phosphate. The extraction conditions include the O/A ratio in Table 1 and the oil-liquid contacting at room temperature. Each of the concentration of iron, zinc, and silver in the solvent after extraction is shown in Table 1.

As shown in Table 1, zinc and silver were also extracted when the iron concentration in tributyl phosphate was low. However, as the iron concentration in tributyl phosphate increased up to about 7 g/L or more, the concentration of zinc and silver in the solvent decreased, which means that the extracted amount of zinc and silver was reduced. In contrast, the iron concentration in tributyl phosphate did not decrease, and no reduction in extraction amount was observed. This is due to the features of tributyl phosphate of more easily extracting iron, zinc, and silver in this order. Consequently, it was confirmed that iron can be selectively extracted by adjusting the concentration of iron in tributyl phosphate as a solvent.

**[Table 1]**

| O/A ratio | 5/1 | 2/1 | 1/2 | 1/5 | 1/10 |
|---|---|---|---|---|---|
| Fe (g/L) | 0.5 | 1.2 | 4.2 | 7.6 | 10.5 |
| Zn (g/L) | 0.4 | 0.6 | 1.1 | 0.3 | 0.1 |
| Ag (mg/L) | 2.1 | 3.6 | 4.4 | 3.3 | 1.9 |

### (Example 2: Co-extraction of silver and zinc)

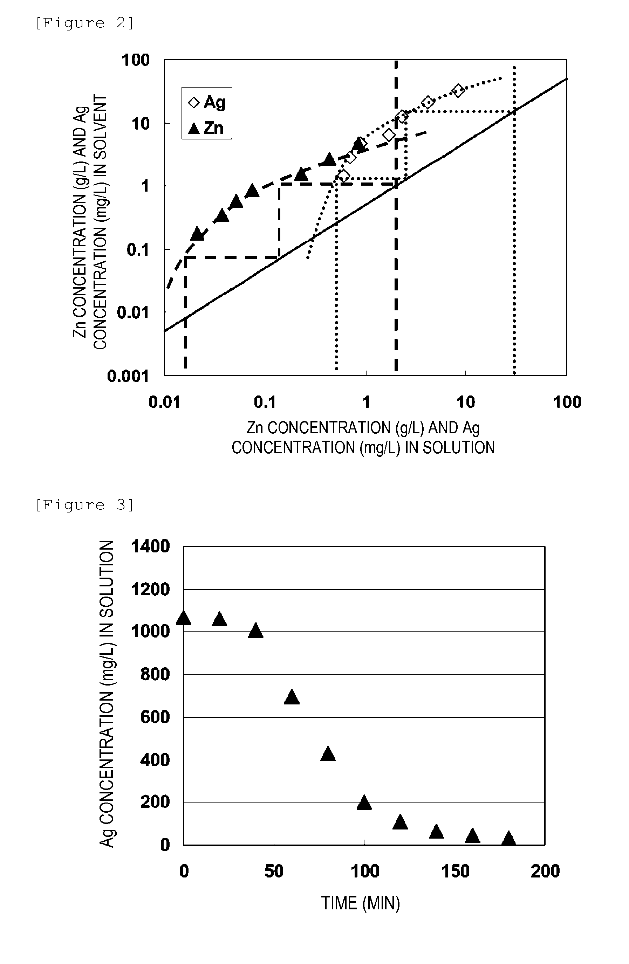

Extraction of an aqueous solution (Cu: 20 g/L, Fe: 0.1 g/L, Zn: 2.1 g/L, Ag: 30 mg/L, Cl: 130 g/L, and Br: 13 g/L) simulated for a pre-extraction solution of silver and zinc was performed using 100 vol.% TBP made by Daihachi Chemical Co., Ltd., so as to make extraction curves, from which the extent of collection of silver and zinc was confirmed. The extraction curves are shown in Figure 2. From Figure 2, it is shown that a two-stage extraction at an O/A ratio of 1/1 enables extraction of silver contained in the pre-extraction solution in the range from 30 mg/L to less than 1 mg/L, and zinc in the range from 2.1 g/L to less than 0.1 mg/L.

### (Example 3: Removal of zinc)

After co-extraction of silver and zinc of an aqueous solution similar to the one for use in Example 2 with use of 100 vol.% TBP, the TBP was subjected to scrubbing using pure water, so as to confirm the removal degree of zinc contained in the solvent after extraction. In Table 2, the zinc concentrations and the silver concentrations in the solvent before and after scrubbing at an O/A ratio of 1/2 are shown. The zinc concentration in the solvent was changed from 2 g/L to 0.03 g/L, as a result of removal of zinc from the solvent. In contrast, the silver concentration showed no difference between before and after scrubbing. Consequently, it was confirmed that zinc can be selectively removed.

**[Table 2]**

| | Zn (g/L) | Ag (mg/L) |
|---|---|---|
| Pre-scrubbing solvent | 2.0 | 10 |
| Post-scrubbing solvent | 0.03 | 10 |

### (Example 4: Extraction of silver)

Extraction of an aqueous solution (Cu: 20 g/L, Ag: 30 mg/L, Cl: 130 g/L, and Br: 13 g/L) simulated for a pre-extraction solution of silver was performed using 100 vol.% TBP, so as to confirm the extent of collection of silver. In Table 3, the silver and copper concentrations before and after extraction and in the solvent after extraction in two-stage extraction at an O/A ratio of 1/1 are shown. As shown in Table 3, the silver concentration in the solution was changed from 30 mg/L to less than 1 mg/L, resulting in extraction of approximately the whole quantity. In contrast, the copper concentration showed no difference between before and after extraction, resulting in extraction of almost none. Consequently, it was confirmed that silver can be selectively extracted.

**[Table 3]**

| | Cu (g/L) | Ag (mg/L) |
|---|---|---|
| Pre-extraction solution | 20 | 30 |
| Post-second-stage extraction solution | 20 | 0.5 |
| Post-extraction solvent | <0.1 | 29.5 |

### (Example 5: Repeated extraction using TBP after back extraction)

In the present invention, TBP after back extraction of silver can be repeatedly used for extraction. A test for confirming whether silver can be repeatedly extracted or not was performed. The extraction was performed by using the same simulated solution for use in Example 4, in two stages under the same conditions. The test results are shown in Table 4. From Table 4, it was confirmed that even in the case of repeatedly using TBP, almost all the quantity of silver can be selectively extracted without change in the extraction effect. It was thereby confirmed that TBP can be repeatedly used.

**[Table 4]**

| | Cu (g/L) | Ag (mg/L) |
|---|---|---|
| Concentration in post-back extraction solvent | <0.1 | 1 |
| Pre-extraction solution | 20 | 30 |
| Post-back extraction solution | 20 | 0.5 |
| Post-back extraction solvent | <0.1 | 30.5 |

### (Example 6: Back extraction of silver)

An aqueous solution capable of forming a complex with silver enables silver in TBP to be back-extracted. In order to select the back extraction solution for silver, TBP containing 25 mg/L of silver was back-extracted using 5 mol/L of an NaCl solution, a hydrochloric acid solution, or 1 mol/L of a sodium thiosulfate solution. Back extraction was performed under conditions with an O/A ratio of 1/1, at room temperature, for a reaction time of 15 minutes. The back extraction results are shown in Table 5. It was confirmed that silver was satisfactorily back-extracted using any of the solution.

**[Table 5]**

| | Ag concentration in pre-back extraction TBP (mg/L) | Ag concentration in post-back extraction TBP (mg/L) |
|---|---|---|
| NaCl solution | 25 | 3.3 |
| Hydrochloric acid | 25 | 1.5 |
| Sodium thiosulfate | 25 | <1 |

### (Example 7: Silver cementation)

An aqueous solution containing 1.0 g/L of silver and 1.0 mol/L of sodium thiosulfate as post-back extraction solution of silver was subjected to cementation using copper plate with nitrogen gas blown in. The test was performed under conditions with 1 L of a silver solution, a nitrogen flow rate of 0.5 L/min, a precipitation area of 40 cm², a reaction temperature of 40°C, and a reaction time of 3 hours.

As a test result, the relationships between the reaction time and the silver concentration in the solution are shown in Figure 3. From the test results, it was confirmed that silver was satisfactorily precipitated, and the silver concentration in the solution was decreased from 1.0 g/L to about less than 50 mg/L, achieving collection of 0.9 g of crude silver. The crude silver obtained had a silver quality of 80% or more. From the results, it was confirmed that high-purity silver can be easily collected from the silver solution obtained in back extraction by cementation.

### (Example 8: Back extraction with repeated use of post-cementation solution)

In the present invention, the Ag post-cementation solution can be supplied once again to the back extraction. A repeat test was performed for confirming whether the post-cementation solution can be repeatedly used or not.

A post-cementation solution of silver containing 1.0 mol/L of sodium thiosulfate, 350 mg/L of silver, and 1100 mg/L of copper was used as the back extraction solution. TBP containing 25 mg/L of silver was used as solvent. The back extraction was performed using these, under the conditions with an O/A ratio of 2/1, at room temperature, for a reaction time of 15 minutes. The test results are shown in Table 6. From the test results, it was confirmed that almost all the quantity of silver in TBP was back-extracted even with use of the post-cementation solution containing copper, with the results equivalent to those containing no silver and copper described in Example 6. In addition, it was confirmed that the post-cementation solution can be repeatedly used without mixing of copper into the solvent after back extraction.

**[Table 6]**

| | Post-cementation solution | Pre-back extraction TBP | Post-back extraction solution | Post-back extraction TBP |
|---|---|---|---|---|
| Cu concentration (mg/L) | 1100 | <0.1 | 1100 | <10 |
| Ag concentration (mg/L) | 350 | 25 | 400 | <1 |

## Claims

1. A method for collecting silver comprising:
separating the silver and at least one of iron and zinc from an acidic aqueous solution containing the silver and at least one of the iron and the zinc by solvent extraction using tributyl phosphate as an extractant.

2. The method for collecting silver according to claim 1, wherein the acidic aqueous solution contains no iron and the method comprises the steps of:
solvent-extracting the zinc together with the silver from the acidic aqueous solution using the tributyl phosphate;
removing the zinc from the solvent containing the silver and zinc after the solvent extraction by scrubbing; and
back-extracting the silver from the solvent containing the silver after the solvent extraction with the zinc removed.

3. The method for collecting silver according to claim 1, wherein the acidic aqueous solution contains no zinc and the method comprises the steps of:
selectively solvent-extracting the iron from the acidic aqueous solution using tributyl phosphate having an adjusted metal concentration;
solvent-extracting the silver from the acidic aqueous solution after the selective extraction of the iron using the tributyl phosphate; and
back-extracting the silver from the solvent containing the silver after the solvent extraction.

4. The method for collecting silver according to claim 1, wherein the acidic aqueous solution contains both of the iron and the zinc, and the method comprises the steps of:
selectively solvent-extracting the iron from the acidic aqueous solution using tributyl phosphate having an adjusted metal concentration;
solvent-extracting the zinc together with the silver from the acidic aqueous solution after the selective extraction of the iron using the tributyl phosphate;
removing the zinc from the solvent containing the zinc and silver after the solvent extraction by scrubbing; and
back-extracting the silver from the solvent containing the silver after the solvent extraction with the zinc removed.

5. The method for collecting silver according to any one of claims 1 to 4, wherein the silver is separated from at least one of the iron and the zinc by adjusting the concentrations of metals contained in the tributyl phosphate for use in the solvent extraction and in a scrubbing solution for use in removal of a prescribed metal from the solvent-extracted metals, respectively.

6. The method for collecting silver according to any one of claims 1 to 5, wherein when the acidic aqueous solution contains copper, the copper is left in the post-extraction solution without performing the solvent extraction.

7. The method for collecting silver according to any one of claims 2 to 4, wherein a back-extractant used in the step of back-extracting is a sodium thiosulfate solution.

8. The method for collecting silver according to any one of claims 2 to 4, wherein the back-extractant used in the step of back-extracting is thiosulfuric acid, hydrochloric acid, a saline solution, or nitric acid.

9. The method for collecting silver according to any one of claims 2 to 8, further comprising the step of:
precipitating the silver from the solution by cementation after the back extraction of the silver.

10. The method for collecting silver according to claim 7 or 9, wherein a concentration of silver in the sodium thiosulfate solution after the back extraction is controlled to 0.5 g/L or more.

11. The method for collecting silver according to claim 9 or 10, wherein when the cementation is performed using a copper component, the post-cementation solution is supplied into the back-extractant for repeated use.

12. The method for collecting silver according to any one of claims 1 to 11, wherein a silver concentration in the acidic aqueous solution is 100 mg/L or less.

13. The method for collecting silver according to any one of claims 1 to 12, wherein a quality of the collected silver-containing material is 50% or more.

14. The method for collecting silver according to any one of claims 1 to 13, wherein the acidic aqueous solution is a post-leaching solution obtained after leaching of ores or mineral concentrates containing sulfides of copper.
